# EUROPEAN PATENT APPLICATION

(11) **EP 4 492 269 A1**
(43) Date of publication of application: **15.01.2025**
(21) Application number: 23777922.8
(22) Date of filing: 21.03.2023
(51) Int. Cl.: G06F 21/56

(54) **METHOD FOR DETECTING RANSOMWARE, AND RELATED SYSTEM AND STORAGE MEDIUM**

(30) Priority: 29.03.2022 CN 202210318593
(71) Applicant: Huawei Technologies Co., Ltd., Shenzhen, Guangdong 518129 (CN)
(72) Inventor: TAN, Feng, Shenzhen, Guangdong 518129 (CN); WANG, Sen, Shenzhen, Guangdong 518129 (CN); ZHANG, Gong, Shenzhen, Guangdong 518129 (CN); LIU, Jinhu, Shenzhen, Guangdong 518129 (CN)
(74) Representative: Maiwald GmbH
(86) International application number: PCT/CN2023/082787
(87) International publication number: WO 2023/185549

(57) **Abstract**

Embodiments of this application provide a method for detecting ransomware, a related system, and a storage medium. The method includes: obtaining a partial feature of a target file based on preset data in the target file, where the partial feature includes a partial incremental entropy and/or partial histogram statistical data; determining, based on the partial feature of the target file, whether the target file is an encrypted file; and determining, if the target file is the encrypted file, that the target file is attacked by the ransomware. Compared with an existing method of calculating an index such as an entropy or a chi-squared test value of an entire file and determining file encryption and damage a status in combination with a threshold, file encryption and damage status detection is performed based on the partial feature of the file in this solution in this method. This method has low computing overheads and high detection efficiency. **In** addition, this solution does not require a threshold to detect and determine the file encryption and damage status, and has extremely high detection accuracy.

## Description

This application claims priority to Chinese Patent Application No. 202210318593.0, filed with the China National Intellectual Property Administration on March 29, 2022 and entitled "METHOD FOR DETECTING RANSOMWARE, RELATED SYSTEM, AND STORAGE MEDIUM", which is incorporated herein by reference in its entirety.

### TECHNICAL FIELD

This application relates to the field of network security, and in particular, to a method for detecting ransomware, a related system, and a storage medium.

### BACKGROUND

Ransomware is a type of malware that encrypts user data locally on a user computer according to a strong encryption algorithm, so that the data cannot be recovered and accessed, unless a ransom is paid to obtain a key, for the purpose of extorting money. If the ransom is not paid within a specified period of time, the file data is lost permanently, or worse, the data may not be recovered even if the ransom is paid.

The large-scale outbreak of ransomware brings great harm to enterprises, governments, organizations, and individuals, causing huge economic losses. The ransomware becomes one of the most serious threats to Internet security. In addition, attack means, attack frequencies spreading modes, attack targets, and damage degrees of the ransomware are gradually increasing, and an impact scope is expanding.

Therefore, an effective early and timely ransomware detection technique is urgently required to effectively detect ransomware attacks, isolate and protect user data timely, and quickly recover the user data, to implement real-time security protection of the user data.

Currently, an encryption status of each data block is detected through a chi-squared test. If a chi-squared test value of a write data block exceeds a threshold, it is considered that the data block is encrypted. Whether there is a ransomware attack is determined based on an encryption status of data block granularity, middle accumulated data block granularity, and file granularity. Because encryption states of each write data block, a middle accumulated data block, and finally generated file three-level granularity data needs to be detected, computing overheads are large, and performance of a storage system is affected. In addition, an encryption status of an encrypted data block obtained after entropy cleaning such as Base64 encoding cannot be detected through the chi-squared test used in this technique, which has a high miss detection probability. Moreover, it is likely to falsely detect compressed data distributed similar to encrypted data, which has a high false detection rate.

### SUMMARY

This application discloses a method for detecting ransomware, a related system, and a storage medium, which can increase file detection efficiency and accuracy.

According to a first aspect, an embodiment of this application provides a method for detecting ransomware, including: obtaining a partial feature of a target file based on preset data in the target file, where the partial feature includes a partial incremental entropy and/or partial histogram statistical data; determining, based on the partial feature of the target file, whether the target file is an encrypted file; and determining, if the target file is the encrypted file, that the target file is attacked by the ransomware.

In this embodiment of this application, whether the target file is the encrypted file is determined based on the partial feature obtained based on the preset data in the target file; and if the target file is the encrypted file, it is determined that the target file is attacked by the ransomware. By using this method, compared with an existing method of calculating an index such as an entropy or a chi-squared test value of an entire file and determining a file encryption and damage status in combination with a threshold, file encryption and damage status detection is performed based on the partial feature of the file in this solution. This method has low computing overheads and high detection efficiency. In addition, this solution does not require a threshold to detect and determine the file encryption and damage status, and has extremely high detection accuracy.

In a possible implementation, the method further includes: obtaining a magic number and a file name extension of the target file; determining, based on a preset correspondence between the magic number and the file name extension, whether the magic number corresponds to the file name extension in the target file; and triggering, if the magic number corresponds to the file name extension in the target file, the operation of obtaining a partial feature of a target file based on preset data in the target file.

In this embodiment of this application, the correspondence between the magic number and the file name extension of the target file is first detected, and when the magic number corresponds to the file name extension in the target file, whether the target file is the encrypted file is then determined based on the partial feature obtained based on the preset data in the target file; and if the target file is the encrypted file, it is determined that the target file is attacked by the ransomware. By using this method, in this solution, a file encryption and damage status is preliminarily determined by matching the magic number and the file name extension. If the preliminarily detected file status is normal, the file encryption and damage status is then detected in depth based on the partial feature of the file. Accuracy of file detection is increased through double detection in this way. In addition, the file encryption and damage status detection is performed based on the partial feature of the file, which has low computing overheads and increases detection efficiency.

In a possible implementation, the method further includes: obtaining a plurality of operation records of a plurality of operated files, where the plurality of operation records correspond to the plurality of operated files, and each of the plurality of operation records is for recording an operation on an operated file corresponding to the operation record; generating a plurality of operation mode sequences within first preset duration based on the plurality of operation records, where the plurality of operation mode sequences correspond to the plurality of operation records; obtaining, one by one from the plurality of operation mode sequences, an operation mode sequence that matches a preset operation mode sequence; and determining, when a quantity of operation mode sequences that match the preset operation mode sequence is greater than a first preset quantity, an operated file corresponding to the operation mode sequence that matches the preset operation mode sequence as the target file.

In this embodiment of this application, quick screening for abnormal operation behaviors is performed based on the plurality of operation records of the plurality of operated files. A common user does not continuously perform operations corresponding to the foregoing eight operation mode sequences on a large quantity of files in a short period of time. In this case, an abnormal file is screened out from an I/O behavior dimension, and further the abnormal file is determined as the target file. Then, the correspondence between the magic number and the file name extension of the target file is detected. When the magic number corresponds to the file name extension in the target file, whether the target file is the encrypted file is then determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

In a possible implementation, the method further includes: obtaining a plurality of operation records of a plurality of operated files, and obtaining, based on the plurality of operation records, a same operated file on which a write operation is performed by a same device, where the plurality of operation records correspond to the plurality of operated files, and each of the plurality of operation records is for recording an operation on an operated file corresponding to the operation record; successively obtaining a write offset and a write length of the same operated file on which the write operation is performed by the same device; accumulating, if a current write offset is greater than a previous write offset for the same operated file on which the write operation is performed by the same device, a current write length and a previous write length for the same operated file to obtain an accumulated write length value of the same operated file; obtaining a write ratio of the same operated file based on a size of the same operated file and the accumulated write length value; and determining, if the write ratio of the same operated file within second preset duration is not less than a preset write ratio, the same operated file on which the write operation is performed by the same device as the target file.

In this embodiment of this application, quick screening for abnormal operation behaviors is performed based on the plurality of operation records of the plurality of operated files. A common user writes little content when performing the write operation in a short period of time. In this case, an abnormal file is screened out from an I/O behavior dimension, and further the correspondence between the magic number and the file name extension of the abnormal file (the target file) is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

In a possible implementation, the method further includes: obtaining a plurality of operation records of a plurality of operated files, and obtaining operated files corresponding to a first operation based on the plurality of operation records, where the plurality of operation records correspond to the plurality of operated files, and each of the plurality of operation records is for recording an operation on an operated file corresponding to the operation record; obtaining, one by one from the operated files corresponding to the first operation, an operated file that matches a preset abnormal file name extension; and determining, when a quantity of operated files that match the preset abnormal file name extension is greater than a second preset quantity, the operated file that matches the preset abnormal file name extension as the target file.

In this embodiment of this application, quick screening for abnormal operation behaviors is performed based on the plurality of operation records of the plurality of operated files. A common user does not add an abnormal name extension to a file. In this case, an abnormal file is screened out from an I/O behavior dimension, and further the correspondence between the magic number and the file name extension of the abnormal file (the target file) is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

In a possible implementation, the method further includes: obtaining a plurality of operation records of a plurality of operated files, and obtaining an operated file corresponding to a second operation and a third operation based on the plurality of operation records, where the plurality of operation records correspond to the plurality of operated files, each of the plurality of operation records is for recording an operation on an operated file corresponding to the operation record, and the second operation and the third operation are operations corresponding to a same operated file; and determining, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

In this embodiment of this application, quick screening for abnormal operation behaviors is performed based on the plurality of operation records of the plurality of operated files, and further an operated file corresponding to an abnormal operation record is determined as the target file. Then, the correspondence between the magic number and the file name extension of the target file is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

In a possible implementation, the method further includes: sending the target file to a user to determine whether the target file undergoes an encryption operation performed by the user; and sending an alarm prompt if the user does not perform the encryption operation on the target file.

According to a second aspect, this application provides an apparatus for detecting ransomware, including: an obtaining module, configured to obtain a partial feature of a target file based on preset data in the target file, where the partial feature includes a partial incremental entropy and/or partial histogram statistical data; a judgment module, configured to determine, based on the partial feature of the target file, whether the target file is an encrypted file; and a determining module, configured to determine, if the target file is the encrypted file, that the target file is attacked by the ransomware.

In a possible implementation, the apparatus further includes a comparison module, configured to: obtain a magic number and a file name extension of the target file; determine, based on a preset correspondence between the magic number and the file name extension, whether the magic number corresponds to the file name extension in the target file; and trigger, if the magic number corresponds to the file name extension in the target file, the operation of obtaining a partial feature of a target file based on preset data in the target file.

In a possible implementation, the apparatus further includes a detection module, configured to: obtain a plurality of operation records of a plurality of operated files, where the plurality of operation records correspond to the plurality of operated files, and each of the plurality of operation records is for recording an operation on an operated file corresponding to the operation record; generate a plurality of operation mode sequences within first preset duration based on the plurality of operation records, where the plurality of operation mode sequences correspond to the plurality of operation records; obtain, one by one from the plurality of operation mode sequences, an operation mode sequence that matches a preset operation mode sequence; and determine, when a quantity of operation mode sequences that match the preset operation mode sequence is greater than a first preset quantity, an operated file corresponding to the operation mode sequence that matches the preset operation mode sequence as the target file.

In a possible implementation, the apparatus further includes a detection module, configured to: obtain a plurality of operation records of a plurality of operated files, and obtain, based on the plurality of operation records, an operated file on which a write operation is performed by a same device, where the plurality of operation records correspond to the plurality of operated files, and each of the plurality of operation records is for recording an operation on an operated file corresponding to the operation record; successively obtain a write offset and a write length of the operated file on which the write operation is performed by the same device; accumulate, if a current write offset is greater than a previous write offset for the operated file on which the write operation is performed by the same device, a current write length and a previous write length for the operated file to obtain an accumulated write length value of the operated file; obtain a write ratio of the operated file based on a size of the operated file and the accumulated write length value; and determine, if the write ratio of the operated file within second preset duration is not less than a preset write ratio, the operated file on which the write operation is performed by the same device as the target file.

In a possible implementation, the apparatus further includes a detection module, configured to: obtain a plurality of operation records of a plurality of operated files, and obtain operated files corresponding to a first operation based on the plurality of operation records, where the plurality of operation records correspond to the plurality of operated files, and each of the plurality of operation records is for recording an operation on an operated file corresponding to the operation record; obtain, one by one from the operated files corresponding to the first operation, an operated file that matches a preset abnormal file name extension; and determine, when a quantity of operated files that match the preset abnormal file name extension is greater than a second preset quantity, the operated file that matches the preset abnormal file name extension as the target file.

In a possible implementation, the apparatus further includes a detection module, configured to: obtain a plurality of operation records of a plurality of operated files, and obtain an operated file corresponding to a second operation and a third operation based on the plurality of operation records, where the plurality of operation records correspond to the plurality of operated files, each of the plurality of operation records is for recording an operation on an operated file corresponding to the operation record, and the second operation and the third operation are operations corresponding to a same operated file; and determine, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

In a possible implementation, the apparatus further includes a prompt module, configured to: send the target file to a user to determine whether the target file undergoes an encryption operation performed by the user; and send an alarm prompt if the user does not perform the encryption operation on the target file.

According to a third aspect, this application provides a device for detecting ransomware, including a processor and a memory. The processor is connected to the memory. The memory is configured to store program code. The processor is configured to call the program code to perform the method according to any possible implementation of the first aspect.

According to a fourth aspect, this application provides a chip system. The chip system is applied to an electronic device. The chip system includes one or more interface circuits and one or more processors. The interface circuit and the processor are interconnected by a line. The interface circuit is configured to receive a signal from a memory of the electronic device and send the signal to the processor. The signal includes computer instructions stored in the memory. When the processor executes the computer instructions, the electronic device performs the method according to any possible implementation of the first aspect.

According to a fifth aspect, this application provides a computer storage medium, including computer instructions. When the computer instructions are run on an electronic device, the electronic device performs the method according to any possible implementation of the first aspect.

According to a sixth aspect, an embodiment of this application provides a computer program product. When the computer program product is run on a computer, the computer performs the method according to any possible implementation of the first aspect.

It may be understood that the apparatus according to the second aspect, the device according to the third aspect, the chip system according to the fourth aspect, the computer storage medium according to the fifth aspect, and the computer program product according to the sixth aspect are all configured to perform the method according to any possible implementation of the first aspect. Therefore, for beneficial effects that can be achieved by the apparatus, the device, the chip system, the computer storage medium, and the computer program product, refer to the beneficial effects in the corresponding method. Details are not described herein again.

### BRIEF DESCRIPTION OF DRAWINGS

The following describes the accompanying drawings used in embodiments of this application.
FIG. 1a is a schematic diagram of an architecture of a system for detecting ransomware according to an embodiment of this application;
FIG. 1b is a schematic diagram of an architecture of another system for detecting ransomware according to an embodiment of this application;
FIG. 1c is a schematic diagram of an architecture of still another system for detecting ransomware according to an embodiment of this application;
FIG. 2 is a schematic flowchart of a method for detecting ransomware according to an embodiment of this application;
FIG. 3 is a schematic flowchart of another method for detecting ransomware according to an embodiment of this application;
FIG. 4a is a schematic flowchart of still another method for detecting ransomware according to an embodiment of this application;
FIG. 4b is a schematic diagram of quick screening for abnormal operation behaviors according to an embodiment of this application;
FIG. 5A and FIG. 5B are a schematic flowchart of another method for detecting ransomware according to an embodiment of this application;
FIG. 6 is a schematic diagram of a structure of an apparatus for detecting ransomware according to an embodiment of this application; and
FIG. 7 is a schematic diagram of a structure of a device for detecting ransomware according to an embodiment of this application.

### DESCRIPTION OF EMBODIMENTS

The following describes embodiments of this application with reference to the accompanying drawings in embodiments of this application. Terms used in implementations of embodiments of this application are merely used to explain specific embodiments of this application, but are not intended to limit this application.

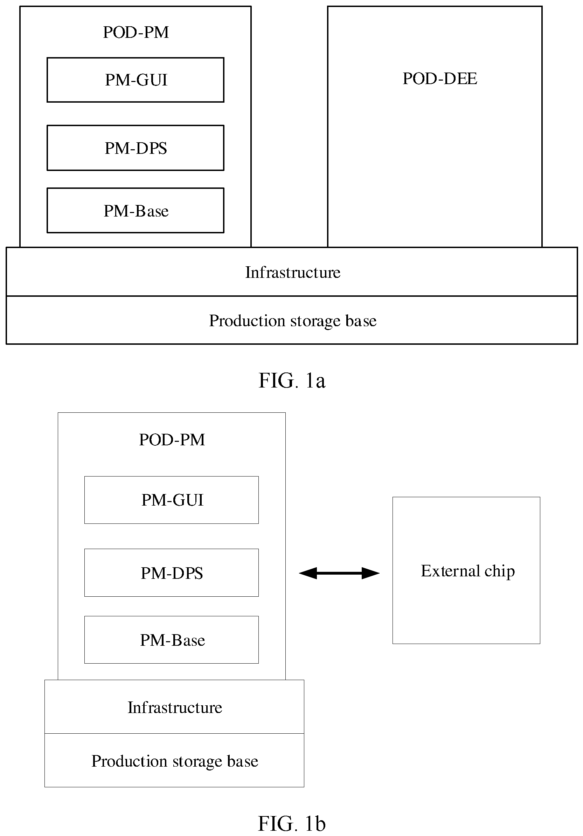

FIG. 1a is a schematic diagram of an architecture of a system for detecting ransomware according to an embodiment of this application. The system may be a storage system. The storage system includes a production storage base, an infrastructure, a subsystem POD-PM configured to deploy a protect manager (Protect Manager, PM), and a POD-DEE configured to deploy a data enable engine (Data Enable Engine, DEE).

The production storage base is used as underlying storage to carry production services. For example, the production storage base is Dorado presentation middleware.

The infrastructure is configured to provide databases and the like. For example, the infrastructure includes a container POD, an open-source platform (such as Kubernetes or K8S), a database (such as GuassDB), and the like.

The POD-PM is management software. The POD-PM may include a PM-GUI, a PM-DPS, and a PM-Base.

The POD-DEE is configured to deploy a method for detecting ransomware in this solution for ransomware detection.

In this embodiment, deployment is performed in a containerized manner, so that a built-in operating system of the storage system can directly perform real-time detection of ransomware.

FIG. 1b is a schematic diagram of an architecture of another system for detecting ransomware according to an embodiment of this application. The system includes a storage system and an external chip. A method for detecting ransomware in this solution is deployed on the external chip. The external chip is connected to the storage system through a PCIE interface, so that the storage system detects the ransomware based on computing power of the external chip. The storage system includes a production storage base, an infrastructure, and a POD-PM. For specific descriptions of the storage system, refer to the embodiment shown in FIG. 1a. Details are not described herein again.

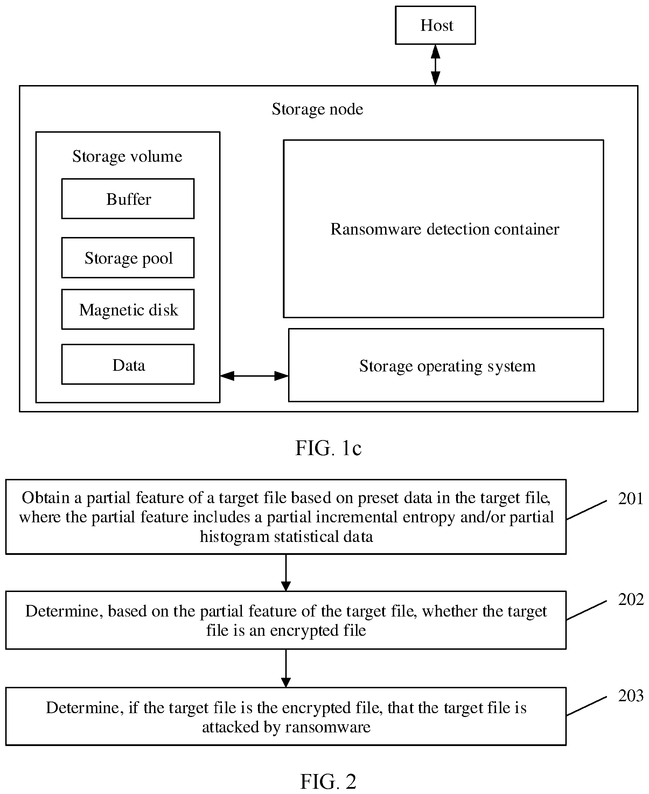

FIG. 1c is a schematic diagram of still another system for detecting ransomware according to an embodiment of this application. The system includes a host and a storage node. The storage node includes a ransomware detection container, a storage volume, and a storage operating system. The host performs an access operation on a file in the storage volume. The ransomware detection container obtains a target file from the storage volume based on the storage operating system, and then performs encryption detection to determine whether the target file is attacked by the ransomware.

FIG. 2 is a schematic flowchart of a method for detecting ransomware according to an embodiment of this application. This embodiment may be performed by a storage system or an external chip, for example, may be performed by a server, or may be performed by an electronic device such as a mobile phone. As shown in FIG. 2, the method may include steps 201 to 203, which are specifically as follows:
201: Obtain a partial feature of a target file based on preset data in the target file, where the partial feature includes a partial incremental entropy and/or partial histogram statistical data.

The target file may be any quantity of files on which an access operation is performed by a device (such as a host). The operation may be a read read operation, a write write operation, a delete unlink operation, a rename rename operation, a create create operation, or the like.

Alternatively, the target file may be at least one operated file selected from the storage system according to a preset algorithm. This is not specifically limited in this solution.

The preset data may be partial byte data in the target file, for example, a preset quantity of bytes in the front of the target file, a preset quantity of bytes in the middle of the target file, or a preset quantity of bytes in the back of the target file.

The partial incremental entropy may be understood as that each time a preset quantity of bytes are added, all bytes are accumulated into a whole to calculate an entropy, and then a plurality of entropies are successively calculated.

The partial histogram statistical data may be understood as a partial statistical distribution formed by a quantity of each of 256 unsigned numbers 0 to 255 in the target file.

In other words, the partial feature, such as the partial incremental entropy and/or the partial histogram statistical data, is constructed based on the obtained partial byte data.

In this embodiment, only the partial incremental entropy and the partial histogram statistical data are used as an example for description. The partial feature may further include a partial chi-squared test value. This is not specifically limited in this solution. The partial chi-squared test value is a test algorithm for calculating the closeness of two data distributions.

202: Determine, based on the partial feature of the target file, whether the target file is an encrypted file.

In a possible implementation, the partial feature of the target file is inputted to a trained machine learning model for file encryption status detection.

For example, binary classification detection is performed by using a pre-trained file encryption status detection machine learning model.

203: Determine, if the target file is the encrypted file, that the target file is attacked by the ransomware.

If the target file is not the encrypted file, it is determined that the target file is a normal file.

If the target file is the encrypted file, it can be determined that the target file is attacked by the ransomware.

In a possible implementation, if the target file is the encrypted file, the encrypted file is sent to a user to determine whether the encrypted file is encrypted by the user. If the encrypted file is not encrypted by the user, the target file is attacked by the ransomware. In this case, an alarm that indicates an encrypted and damaged file may be sent.

In this embodiment of this application, whether the target file is the encrypted file is determined based on the partial feature obtained based on the preset data in the target file; and if the target file is the encrypted file, it is determined that the target file is attacked by the ransomware. By using this method, compared with an existing method of calculating an index such as an entropy or a chi-squared test value of an entire file and determining a file encryption and damage status in combination with a threshold, file encryption and damage status detection is performed based on the partial feature of the file in this solution. This method has low computing overheads and high detection efficiency. In addition, this solution does not require a threshold to detect and determine the file encryption and damage status, and has extremely high detection accuracy.

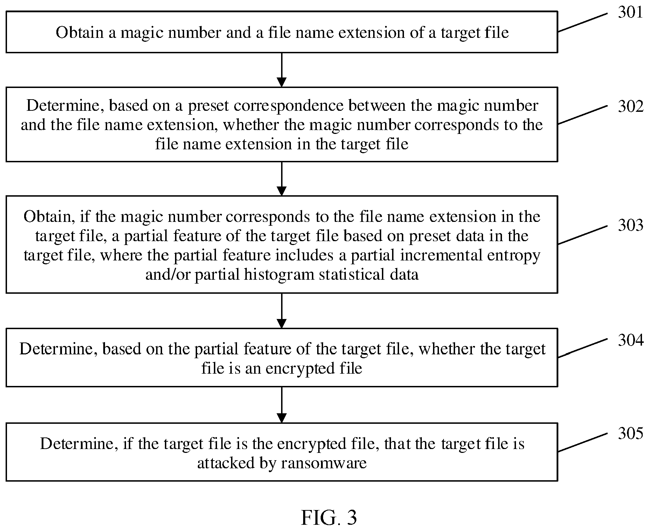

Based on the embodiment shown in FIG. 2, FIG. 3 is a schematic flowchart of another method for detecting ransomware according to an embodiment of this application. As shown in FIG. 3, the method may include steps 301 to 305, which are specifically as follows:

301: Obtain a magic number and a file name extension of the target file.

When the magic number (magic number) is used in the file, a fixed value and a fixed character string are added to a specific file format, and then whether the file includes these data may be checked to quickly recognize the file format.

For example, the beginning of a GIF file includes magic numbers of 47, 49, 46, 38, 39, 61, and other character strings.

The file name extension is a mechanism for an operating system (VMS/CP/M/DOS) to identify a file format, and is for the system to determine which software to run the file that the user wants to open.

For example, the file name extension of the target file may be .doc, .png, or the like.

302: Determine, based on a preset correspondence between the magic number and the file name extension, whether the magic number corresponds to the file name extension in the target file.

In a possible implementation, a correspondence table between the magic number and the file name extension is preset, and the correspondence table is queried to determine whether the extracted magic number matches the file name extension.

303: Obtain, if the magic number corresponds to the file name extension in the target file, the partial feature of the target file based on the preset data in the target file, where the partial feature includes the partial incremental entropy and/or the partial histogram statistical data.

If the magic number does not match (does not correspond to) the file name extension in the target file, the target file is attacked by the ransomware, and an alarm that indicates an encrypted and damaged file may be sent.

If the magic number matches (corresponds to) the file name extension in the target file, the target file after preliminary detection may be a normal file.

For the description of obtaining the partial feature, refer to the foregoing embodiment. Details are not described herein again.

In this solution, a file damage condition is preliminarily detected based on the correspondence between the magic number and the file name extension. If the target file is not damaged, the target file is further detected in depth to determine whether the target file is the encrypted file, that is, to determine whether the target file is attacked by the ransomware. Accuracy of file detection is increased through double detection in this way.

304: Determine, based on the partial feature of the target file, whether the target file is an encrypted file.

In a possible implementation, the partial feature of the target file is inputted to a trained machine learning model for file encryption status detection.

For example, binary classification detection is performed by using a pre-trained file encryption status detection machine learning model.

305: Determine, if the target file is the encrypted file, that the target file is attacked by the ransomware.

If the target file is not the encrypted file, it is determined that the target file is a normal file.

If the target file is the encrypted file, the target file is attacked by the ransomware. In this case, an alarm that indicates an encrypted and damaged file may be sent.

In this embodiment of this application, the correspondence between the magic number and the file name extension of the target file is first detected, and when the magic number corresponds to the file name extension in the target file, whether the target file is the encrypted file is then determined based on the partial feature obtained based on the preset data in the target file; and if the target file is the encrypted file, it is determined that the target file is attacked by the ransomware. By using this method, in this solution, a file encryption and damage status is preliminarily determined by matching the magic number and the file name extension. If the preliminarily detected file status is normal, the file encryption and damage status is then detected in depth based on the partial feature of the file. Accuracy of file detection is increased through double detection in this way. In addition, the file encryption and damage status detection is performed based on the partial feature of the file, which has low computing overheads and increases detection efficiency.

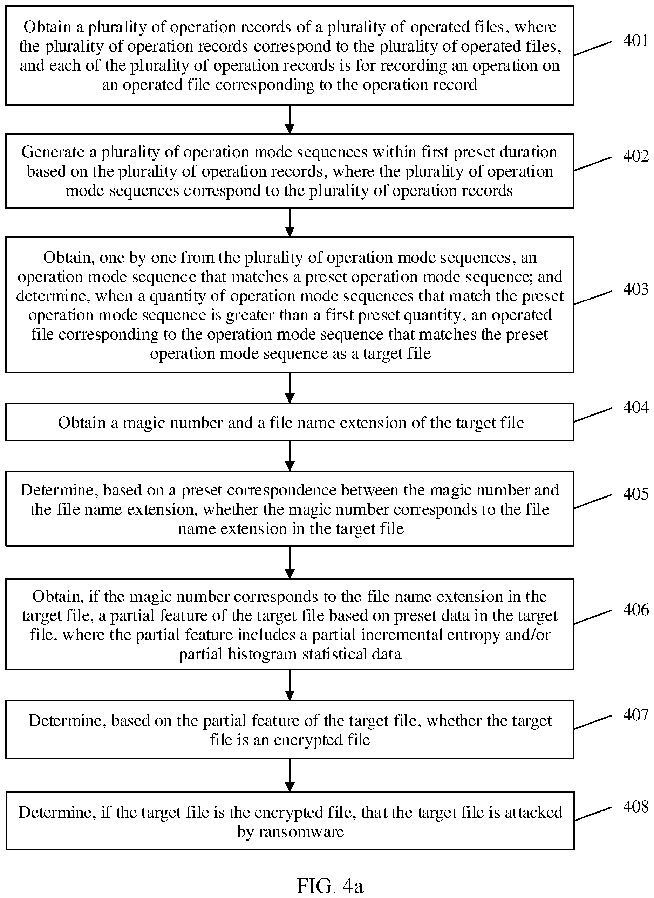

Based on the foregoing embodiments, FIG. 4a is a schematic flowchart of still another method for detecting ransomware according to an embodiment of this application. As shown in FIG. 4a, the method may include steps 401 to 408, which are specifically as follows:

401: Obtain a plurality of operation records of a plurality of operated files, where the plurality of operation records correspond to the plurality of operated files, and each of the plurality of operation records is for recording an operation on an operated file corresponding to the operation record.

In a possible implementation, the plurality of operation records may be obtained from a file system audit log. The file system audit log records, in real time, conditions in which access operations are performed on each file in the storage system by different hosts. A plurality of audit logs recorded in the file system audit log may form an audit log file in an xml format to be stored in the storage system. For example, the POD-DEE reads, in real time, the latest stored xml audit log file in a manner of file system sharing, and parses audit logs one by one at smallest field granularity. The POD-DEE forms a data structure based on each audit log in chronological order.

A file operation for detecting ransomware in the recorded access operations may include read read, write write, delete unlink, rename rename, and create create. A field for detecting ransomware in the file operation recorded in the file system audit log may include an operation event name, time, a host IP, an object type, an object name, an offset, a quantity, an old path, a new path, and the like.

402: Generate a plurality of operation mode sequences within first preset duration based on the plurality of operation records, where the plurality of operation mode sequences correspond to the plurality of operation records.

In a possible implementation, I/O operations are extracted from the file system audit log, and the following three categories (A, B, and C) and eight subcategories (a1, a2, b1, b2, c1, c2, c3, and c4) of I/O operation mode sequences are monitored and matched. The detailed eight subcategories of I/O operations are as follows:
Category A operation a1. read(p(f))-write(p(f)).
Category A operation a2. read(p(f))-write(p(f))-rename(p(f)).
Category B operation b1. read(p(f))-write(p(f'))-remove(p(f)).
Category B operation b2. read(p(f))-remove(p(f))-write(p(f')).
Category C operation c1. read(p(f))-remove(p(f))-write(p'(f))-read(p'(f))-write(p'(f))-read(p'(f))-remove(p'(f))-write(p(f)).
Category C operation c2. )read(p(f))-remove(p(f))-write(p'(f))-read(p'(f))-write(p'(f)-read(p'(f))-write(p(f))-remove(p'(f)).
Category C operation c3. read(p(f))-write(p'(f))-remove(p(f))-read(p'(f))-write(p'(f))-read(p'(f))-remove(p'(f))-write(p(f)).
Category C operation c4. read(p(f))-write(p'(f))-remove(p(f))-read(p'(f))-write(p'(f))-read(p'(f))-write(p(f))-remove(p'(f)).

Herein, p(f) indicates an original path of an original file f, and p'(f) indicates a new path corresponding to the file f.

The category A operations and the category B operations are performed in the original path of the file, and the category C operations are performed in a different path. A write cipher in the category A operations is performed in the original file in the original path. The write cipher is to write encrypted file content to the file. A write cipher in the category B operations is performed in a different file in the original path. A write cipher in the category C operations is to first copy the original file to the different path and then perform the operation on the original file in the different path. In the category B operations, the read original file f and the write new file f' are associated based on file names name by determining an inclusion relationship between the two file names name or calculating an edit Levenshtein distance between the two file names name. In the category C operations, there is no significant association relationship between the read original path and the write different path. Therefore, it is only to be noted that the write cipher that is the same as that in the category A operations and that is in the different path is performed in the original file in the original path.

Each operation record corresponds to at least one operation performed by each device on each operated file in a period of time.

For example, time corresponding to each operation record is 10 ms, and the first preset duration may be, for example, 3 ms. In this case, an operation included in each operation record from recording start time to 3 ms corresponds to one operation mode sequence. Then, an operation included from 3 ms to 6 ms corresponds to one operation mode sequence, and so on.

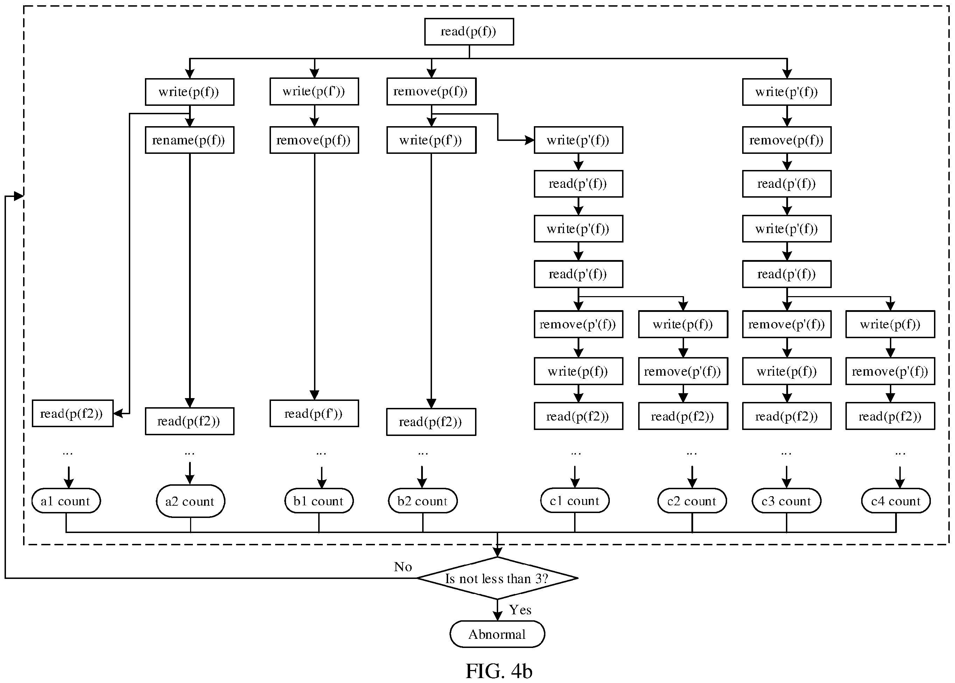

As shown in FIG. 4b, if any operation mode sequence in the eight subcategories of operation mode sequences (where the core operations of a1, a2, c1, c2, c3, and c4 are read-write; and the core operations of b1 and b2 are read-delete) is matched with three files successively or concurrently within mode sequence matching time, for example, 5s, there is an abnormality in the three files. A read new file command read(p(f2)) is to read a new block of the file f or read a new file f2, that is, count for read and write file blocks and count for read and write files. A remove command includes a write command and a delete (unlink) command. A selection interval of the mode sequence matching time may be [3 ms, 5s].

403: Obtain, one by one from the plurality of operation mode sequences, an operation mode sequence that matches a preset operation mode sequence; and determine, when a quantity of operation mode sequences that match the preset operation mode sequence is greater than a first preset quantity, an operated file corresponding to the operation mode sequence that matches the preset operation mode sequence as the target file.

In a possible implementation, operation mode sequences that match the eight subcategories of operation mode sequences are obtained one by one in chronological order. When a quantity of operation mode sequences that match the same operation mode sequence reaches a preset value, operations on these files are abnormal, and these files are determined as the target files.

Correspondingly, matching detection continues to be performed on other files except these matched files, until all the plurality of operated files are detected.

This embodiment is described by using the foregoing implementation as an example. Alternatively, all matched operation mode sequences may be counted, and then the target file is determined. This is not specifically limited in this solution.

404: Obtain a magic number and a file name extension of the target file.

For the description of this part, refer to the foregoing embodiment. Details are not described herein again.

405: Determine, based on a preset correspondence between the magic number and the file name extension, whether the magic number corresponds to the file name extension in the target file.

For the description of this part, refer to the foregoing embodiment. Details are not described herein again.

406: Obtain, if the magic number corresponds to the file name extension in the target file, the partial feature of the target file based on the preset data in the target file, where the partial feature includes the partial incremental entropy and/or the partial histogram statistical data.

If the magic number does not correspond to the file name extension in the target file, the target file is attacked by the ransomware. If the magic number corresponds to the file name extension in the target file, an encryption condition of the target file is further detected.

For the description of this part, refer to the foregoing embodiment. Details are not described herein again.

407: Determine, based on the partial feature of the target file, whether the target file is an encrypted file.

For the description of this part, refer to the foregoing embodiment. Details are not described herein again.

408: Determine, if the target file is the encrypted file, that the target file is attacked by the ransomware.

In this embodiment of this application, quick screening for abnormal operation behaviors is performed based on the plurality of operation records of the plurality of operated files. A common user does not continuously perform operations corresponding to the foregoing eight operation mode sequences on a large quantity of files in a short period of time. In this case, an abnormal file is screened out from an I/O behavior dimension, and further the abnormal file is determined as the target file. Then, the correspondence between the magic number and the file name extension of the target file is detected. When the magic number corresponds to the file name extension in the target file, whether the target file is the encrypted file is then determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

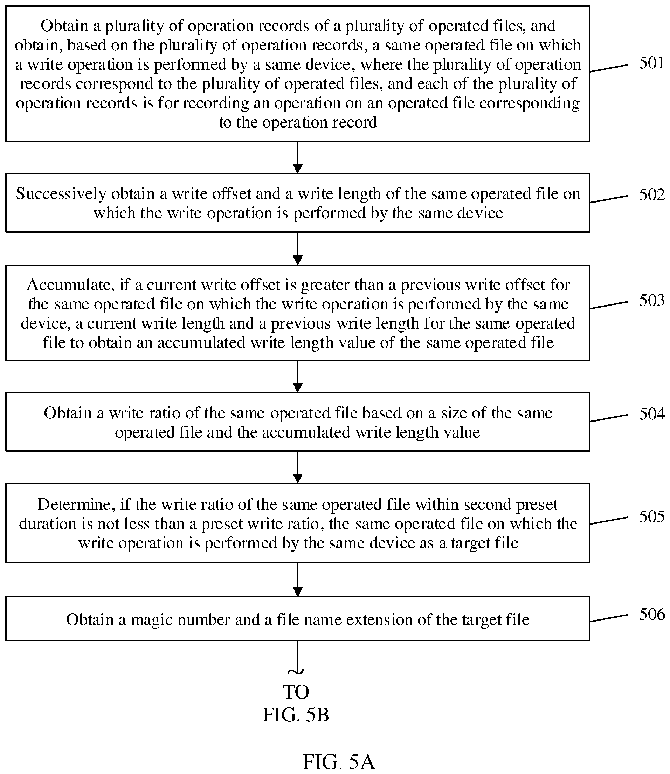

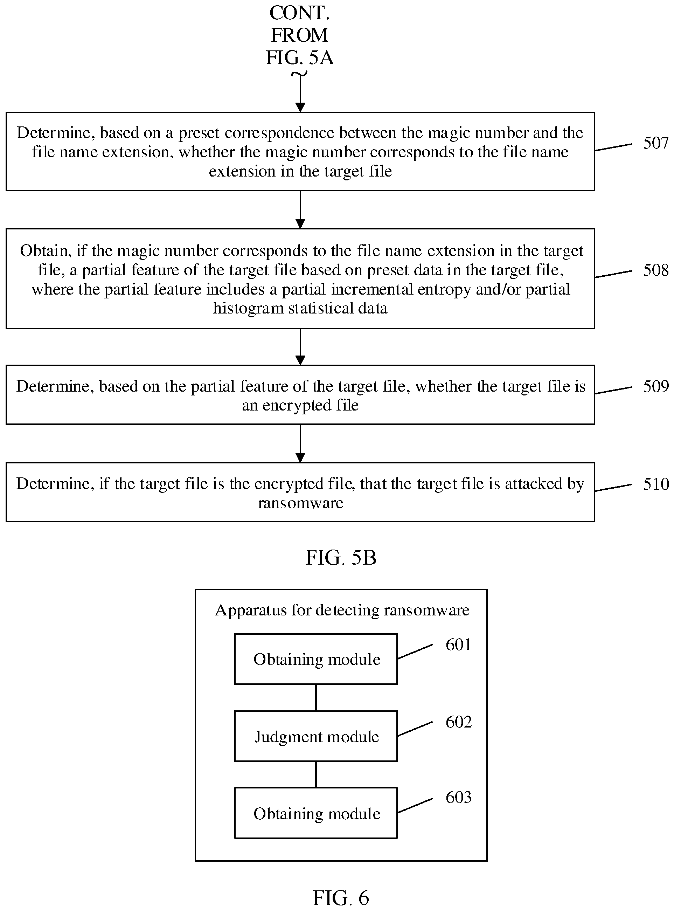

Based on the foregoing embodiments, FIG. 5A and FIG. 5B are a schematic flowchart of still another method for detecting ransomware according to an embodiment of this application. As shown in FIG. 5A and FIG. 5B, the method may include steps 501 to 510, which are specifically as follows:

501: Obtain a plurality of operation records of a plurality of operated files, and obtain, based on the plurality of operation records, a same operated file on which a write operation is performed by a same device, where the plurality of operation records correspond to the plurality of operated files, and each of the plurality of operation records is for recording an operation on an operated file corresponding to the operation record.

In a possible implementation, the plurality of operation records are obtained from a file system audit log, an operation record in which the write operation is performed by the same device is extracted, and then at least one operated file corresponding to the operation record in which the write operation is performed by the same device is determined.

The same device may be a same host IP.

502: Successively obtain a write offset and a write length of the same operated file on which the write operation is performed by the same device.

The same device may perform a plurality of write operations on the same operated file, that is, in chronological order. In this case, a plurality of write offsets and a plurality of write lengths of the same operated file may be successively obtained based on the operation record.

When there are a plurality of operated files on which the write operation is performed by the same device, a write offset and a write length are calculated for each operated file.

The write offset WriteOffset is a write start location relative to an initial location.

The write length WriteCount is a quantity of bytes corresponding to the write operation.

503: Accumulate, if a current write offset is greater than a previous write offset for the same operated file on which the write operation is performed by the same device, a current write length and a previous write length for the same operated file to obtain an accumulated write length value of the same operated file.

504: Obtain a write ratio of the same operated file based on a size of the same operated file and the accumulated write length value.

For example, write ratio ρ = W/N.

In this formula, W is the accumulated length value, and N is the size of the operated file.

505: Determine, if the write ratio of the same operated file within second preset duration is not less than a preset write ratio, the same operated file on which the write operation is performed by the same device as the target file.

For example, the second preset duration includes a corresponding time length from the previous write operation to the current write operation, for example, 5 ms.

If the write ratio of the operated file is not less than a write ratio threshold, the operated file is determined as the target file.

506: Obtain a magic number and a file name extension of the target file.

For the description of this part, refer to the foregoing embodiment. Details are not described herein again.

507: Determine, based on a preset correspondence between the magic number and the file name extension, whether the magic number corresponds to the file name extension in the target file.

For the description of this part, refer to the foregoing embodiment. Details are not described herein again.

508: Obtain, if the magic number corresponds to the file name extension in the target file, the partial feature of the target file based on the preset data in the target file, where the partial feature includes the partial incremental entropy and/or the partial histogram statistical data.

If the magic number does not correspond to the file name extension in the target file, the target file is attacked by the ransomware. If the magic number corresponds to the file name extension in the target file, an encryption condition of the target file is further detected.

For the description of this part, refer to the foregoing embodiment. Details are not described herein again.

509: Determine, based on the partial feature of the target file, whether the target file is an encrypted file.

For the description of this part, refer to the foregoing embodiment. Details are not described herein again.

510: Determine, if the target file is the encrypted file, that the target file is attacked by the ransomware.

In this embodiment of this application, quick screening for abnormal operation behaviors is performed based on the plurality of operation records of the plurality of operated files. A common user writes little content when performing the write operation in a short period of time. In this case, an abnormal file is screened out from an I/O behavior dimension, and further the correspondence between the magic number and the file name extension of the abnormal file (the target file) is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

Based on the foregoing embodiments, an embodiment of this application provides still another method for detecting ransomware. The method may include steps A1 to A8, which are specifically as follows:
A1: Obtain a plurality of operation records of a plurality of operated files, and obtain operated files corresponding to a first operation based on the plurality of operation records, where the plurality of operation records correspond to the plurality of operated files, and each of the plurality of operation records is for recording an operation on an operated file corresponding to the operation record.

The first operation may include a create operation, a write operation, and a rename operation.

For example, operated files corresponding to the create operation, the write operation, and the rename operation are extracted from a file system audit log.

A2: Obtain, one by one from the operated files corresponding to the first operation, an operated file that matches a preset abnormal file name extension.

For example, abnormalities of the operated files corresponding to the first operation are successively determined through querying based on a preset abnormal file name extension list.

The preset abnormal file name extension list may include, for example, acute, bip, c924ca, clop, cmb, crinf, crjoker, crypt, crypto, CTB2, CTBL, cuba, ecc, 3v3r1s, 93ff, aaa, abc, aesir, agjbich, asasin, ccc, cerber, cerber2, cerber3, cryp1, crpyz, cryptoshield, elkd8, enc, EnCiPhErEd, encrypt, encrypted, encrypyedRSA, exx, ezz, fantom, FTCODE, good, LeChiffre, locked, locked4, locky, LOL!, lukitus, micro, mp3, napoleon, odin, OMG!, onion, osiris, pay2key, payday, puma, pzdc, r5a, R16M01D05, RDM, rdmk, rip, RRK, RYK, scarab, seth, shit, SUPERCRYPT, thor, ttt, venusf, venusp, vvv, WCRY, wiyn0sx9jt, XRNT, XTBL, xxx, xyz, zzz, and the like. This is not specifically limited in this solution.

A3: Determine, when a quantity of operated files that match the preset abnormal file name extension is greater than a second preset quantity, the operated file that matches the preset abnormal file name extension as the target file.

The first preset value may be, for example, any positive integer such as 3, 4, or 5.

For example, when a quantity of abnormalities reaches the preset quantity, the operation of performing step A4 on these operated files that match the preset abnormal file name extension is triggered.

Then, a quantity of abnormalities in other files except the foregoing abnormal files is recounted. As long as the preset value is reached, step A4 is performed on the abnormal file. This is repeated until all the plurality of operated files are detected.

A4: Obtain a magic number and a file name extension of the target file.

For the description of this part, refer to the foregoing embodiment. Details are not described herein again.

A5: Determine, based on a preset correspondence between the magic number and the file name extension, whether the magic number corresponds to the file name extension in the target file.

For the description of this part, refer to the foregoing embodiment. Details are not described herein again.

A6: Obtain, if the magic number corresponds to the file name extension in the target file, the partial feature of the target file based on the preset data in the target file, where the partial feature includes the partial incremental entropy and/or the partial histogram statistical data.

If the magic number does not correspond to the file name extension in the target file, the target file is attacked by the ransomware. If the magic number corresponds to the file name extension in the target file, an encryption condition of the target file is further detected.

For the description of this part, refer to the foregoing embodiment. Details are not described herein again.

A7: Determine, based on the partial feature of the target file, whether the target file is an encrypted file.

For the description of this part, refer to the foregoing embodiment. Details are not described herein again.

A8: Determine, if the target file is the encrypted file, that the target file is attacked by the ransomware.

In this embodiment of this application, quick screening for abnormal operation behaviors is performed based on the plurality of operation records of the plurality of operated files. A common user does not add an abnormal name extension to a file. In this case, an abnormal file is screened out from an I/O behavior dimension, and further the correspondence between the magic number and the file name extension of the abnormal file (the target file) is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

Based on the foregoing embodiments, an embodiment of this application provides still another method for detecting ransomware. The method may include steps B1 to B7, which are specifically as follows:
B1: Obtain a plurality of operation records of a plurality of operated files, and obtain an operated file corresponding to a second operation and a third operation based on the plurality of operation records, where the plurality of operation records correspond to the plurality of operated files, each of the plurality of operation records is for recording an operation on an operated file corresponding to the operation record, and the second operation and the third operation are operations corresponding to content of a same operated file.

The second operation may be a read operation, and the third operation may be a write operation or a rename operation.

The second operation and the third operation are operations on the same operated file. In other words, there is a correspondence between the second operation and the third operation.

The correspondence between the write operation and the read operation may be obtained from file names name and file paths path of the write operation and the read operation respectively.

B2: Determine, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

For example, a name extension of a file f1 of the read operation is extracted and added to a read name extension count table for updating, and a name extension of the file f1 corresponding to the file name of the corresponding write operation is extracted and added to a write name extension count table for updating. In other words, the file name corresponding to the read operation is the same as the file name corresponding to the write operation. The foregoing correspondence may be associated based on the read original file f and the write new file f' based on file names name by determining an inclusion relationship between the two file names name or calculating an edit Levenshtein distance between the two file names name. Each time the read name extension count table and the write name extension count table are updated, quantities nr and nw of types of name extensions in the read name extension count table and the write name extension count table are respectively counted. For example, if nr ≥ 2, nw ≥ 1, and nr > nw within time T, the file f1 is abnormal, and an alarm needs to be sent.

B3: Obtain a magic number and a file name extension of the target file.

For the description of this part, refer to the foregoing embodiment. Details are not described herein again.

B4: Determine, based on a preset correspondence between the magic number and the file name extension, whether the magic number corresponds to the file name extension in the target file.

For the description of this part, refer to the foregoing embodiment. Details are not described herein again.

B5: Obtain, if the magic number corresponds to the file name extension in the target file, the partial feature of the target file based on the preset data in the target file, where the partial feature includes the partial incremental entropy and/or the partial histogram statistical data.

If the magic number does not correspond to the file name extension in the target file, the target file is attacked by the ransomware. If the magic number corresponds to the file name extension in the target file, an encryption condition of the target file is further detected.

For the description of this part, refer to the foregoing embodiment. Details are not described herein again.

B6: Determine, based on the partial feature of the target file, whether the target file is an encrypted file.

For the description of this part, refer to the foregoing embodiment. Details are not described herein again.

B7: Determine, if the target file is the encrypted file, that the target file is attacked by the ransomware.

In this embodiment of this application, quick screening for abnormal operation behaviors is performed based on the plurality of operation records of the plurality of operated files, and further an operated file corresponding to an abnormal operation record is determined as the target file. Then, the correspondence between the magic number and the file name extension of the target file is detected. When the magic number corresponds to the file name extension in the target file, whether the target file is the encrypted file is determined based on the partial feature obtained based on the preset data in the target file. If the target file is the encrypted file, it is determined that the target file is attacked by the ransomware. By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases detection efficiency and detection accuracy.

Based on the foregoing embodiments, an embodiment of this application provides still another method for detecting ransomware. The method may include steps C1 to C11, which are specifically as follows:
C1: Obtain a plurality of operation records of a plurality of operated files, where the plurality of operation records correspond to the plurality of operated files, and each of the plurality of operation records is for recording an operation on an operated file corresponding to the operation record.

For the description of this step, refer to the foregoing embodiment. Details are not described herein again.

C2: Generate a plurality of operation mode sequences within first preset duration based on the plurality of operation records, where the plurality of operation mode sequences correspond to the plurality of operation records; and obtain, one by one from the plurality of operation mode sequences, an operation mode sequence that matches a preset operation mode sequence.

For the description of this step, refer to the foregoing embodiment. Details are not described herein again.

C3: Obtain, based on the plurality of operation records, an operated file on which a write operation is performed by a same device, and successively obtain a write offset and a write length of the operated file on which the write operation is performed by the same device; accumulate, if a current write offset is greater than a previous write offset for the operated file on which the write operation is performed by the same device, a current write length and a previous write length for the operated file to obtain an accumulated write length value of the operated file; and obtain a write ratio of the operated file based on a size of the operated file and the accumulated write length value.

For the description of this step, refer to the foregoing embodiment. Details are not described herein again.

C4: Obtain operated files corresponding to a first operation based on the plurality of operation records, and obtain, one by one from the operated files corresponding to the first operation, an operated file that matches a preset abnormal file name extension.

For the description of this step, refer to the foregoing embodiment. Details are not described herein again.

C5: Obtain operated files corresponding to a second operation and a third operation based on the plurality of operation records, where the second operation and the third operation are operations corresponding to a same operated file.

For the description of this step, refer to the foregoing embodiment. Details are not described herein again.

C6: When a quantity of operation mode sequences that match the preset operation mode sequence is greater than a first preset quantity, determine an operated file corresponding to the operation mode sequence that matches the preset operation mode sequence as a first file; and/or if the write ratio of the operated file within second preset duration is not less than a preset write ratio, determine the operated file on which the write operation is performed by the same device as a second file; and/or when a quantity of operated files that match the preset abnormal file name extension is greater than a second preset quantity, determine the operated file that matches the preset abnormal file name extension as a third file; and/or if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, determine the operated file corresponding to the second operation and the third operation as a fourth file, where a target file includes the first file, the second file, the third file, and the fourth file.

For the description of this step, refer to the foregoing embodiment. Details are not described herein again.

Steps C2 to C5 may be performed concurrently, and a sequence is not limited.

In a possible implementation, steps C2 to C5 may alternatively be performed in a preset sequence. For example, the first file is first determined based on the detection in step C2, the detection in step C3 is then performed on other operated files except the first file to determine the second file, the detection in step C4 is then performed on other operated files except the first file and the second file to determine the third file, and finally the detection in step C5 is performed on other operated files except the first file, the second file, and the third file to determine the fourth file, to determine the target file.

After the first file is determined, steps C7 to C11 may be directly performed on the first file. Correspondingly, after the second file, the third file, and the fourth file are separately determined, steps C7 to C11 may be directly performed on the corresponding files.

In this embodiment, the target file is determined comprehensively in the foregoing four detection manners. It is to be noted that the target file may alternatively be determined comprehensively in any two detection manners or in any three detection manners. This is not specifically limited in this solution.

C7: Obtain a magic number and a file name extension of the target file.

For the description of this part, refer to the foregoing embodiment. Details are not described herein again.

C8: Determine, based on a preset correspondence between the magic number and the file name extension, whether the magic number corresponds to the file name extension in the target file.

For the description of this part, refer to the foregoing embodiment. Details are not described herein again.

C9: Obtain, if the magic number corresponds to the file name extension in the target file, the partial feature of the target file based on the preset data in the target file, where the partial feature includes the partial incremental entropy and/or the partial histogram statistical data.

If the magic number does not correspond to the file name extension in the target file, the target file is attacked by the ransomware. If the magic number corresponds to the file name extension in the target file, an encryption condition of the target file is further detected.

For the description of this part, refer to the foregoing embodiment. Details are not described herein again.

C10: Determine, based on the partial feature of the target file, whether the target file is an encrypted file.

For the description of this part, refer to the foregoing embodiment. Details are not described herein again.

C11: Determine, if the target file is the encrypted file, that the target file is attacked by the ransomware.

In a possible implementation, if the target file determined based on step C1 or step C4 is the encrypted file, the encrypted file further needs to be presented to the user, and the user needs to determine whether the file is a file that is being encrypted by the user. If the encryption is not performed by the user, the target file is attacked by the ransomware, and therefore an alarm is sent.

If the target file determined based on step C2 or step C3 is the encrypted file, an alarm may be directly sent without user determination, and recovery is performed timely through a security snapshot.

An alarm mode may include the following cases: (1) When a ransomware attack is detected, an alarm prompt is sent and an attacked file is presented. (2) A back end continuously detects and records all encrypted files for the user to subsequently check and recover the files one by one. (3) If the user ignores the alarm, continuous detection and record updating at the back end are not affected. (4) At a specific frequency, for example, 3 minutes, the alarm is sent again and the latest encrypted file is presented. (5) If the user ignores the alarm for three times, the alarm is no longer sent. (6) If the user checks the record in the previous two times of the alarm and determines that no alarm is required, the alarm is no longer sent.

The alarm mode is merely an example, and may alternatively be set in another way. This is not specifically limited in this solution.

By using this method, in this solution, quick screening for abnormal operation behaviors is performed based on the plurality of operation records of the operated files, which increases accuracy of file detection, reduces a miss detection probability of files, and further increases detection efficiency. In addition, a file encryption and damage status is preliminarily determined by matching the magic number and the file name extension, and then file encryption and damage status detection is performed based on the partial feature of the file, which has low computing overheads, and further increases file detection efficiency and detection accuracy.

Based on the description of the foregoing embodiments of the method for detecting ransomware, an embodiment of the present invention further discloses an apparatus for detecting ransomware. FIG. 6 is a schematic diagram of a structure of an apparatus for detecting ransomware according to an embodiment of the present invention. The apparatus includes an obtaining module 601, a judgment module 602, and a determining module 603, which are specifically as follows:

The obtaining module 601 is configured to obtain a partial feature of a target file based on preset data in the target file, where the partial feature includes a partial incremental entropy and/or partial histogram statistical data.

The judgment module 602 is configured to determine, based on the partial feature of the target file, whether the target file is an encrypted file.

The determining module 603 is configured to determine, if the target file is the encrypted file, that the target file is attacked by the ransomware.

In a possible implementation, the apparatus further includes a comparison module, configured to:
obtain a magic number and a file name extension of the target file;
determine, based on a preset correspondence between the magic number and the file name extension, whether the magic number corresponds to the file name extension in the target file; and
trigger, if the magic number corresponds to the file name extension in the target file, the operation of obtaining a partial feature of a target file based on preset data in the target file.

In a possible implementation, the apparatus further includes a detection module, configured to:
obtain a plurality of operation records of a plurality of operated files, where the plurality of operation records correspond to the plurality of operated files, and each of the plurality of operation records is for recording an operation on an operated file corresponding to the operation record;
generate a plurality of operation mode sequences within first preset duration based on the plurality of operation records, where the plurality of operation mode sequences correspond to the plurality of operation records;
obtain, one by one from the plurality of operation mode sequences, an operation mode sequence that matches a preset operation mode sequence; and
determine, when a quantity of operation mode sequences that match the preset operation mode sequence is greater than a first preset quantity, an operated file corresponding to the operation mode sequence that matches the preset operation mode sequence as the target file.

In a possible implementation, the apparatus further includes a detection module, configured to:
obtain a plurality of operation records of a plurality of operated files, and obtain, based on the plurality of operation records, an operated file on which a write operation is performed by a same device, where the plurality of operation records correspond to the plurality of operated files, and each of the plurality of operation records is for recording an operation on an operated file corresponding to the operation record;
successively obtain a write offset and a write length of the operated file on which the write operation is performed by the same device;
accumulate, if a current write offset is greater than a previous write offset for the operated file on which the write operation is performed by the same device, a current write length and a previous write length for the operated file to obtain an accumulated write length value of the operated file;
obtain a write ratio of the operated file based on a size of the operated file and the accumulated write length value; and
determine, if the write ratio of the operated file within second preset duration is not less than a preset write ratio, the operated file on which the write operation is performed by the same device as the target file.

In a possible implementation, the apparatus further includes a detection module, configured to:
obtain a plurality of operation records of a plurality of operated files, and obtain operated files corresponding to a first operation based on the plurality of operation records, where the plurality of operation records correspond to the plurality of operated files, and each of the plurality of operation records is for recording an operation on an operated file corresponding to the operation record;
obtain, one by one from the operated files corresponding to the first operation, an operated file that matches a preset abnormal file name extension; and
determine, when a quantity of operated files that match the preset abnormal file name extension is greater than a second preset quantity, the operated file that matches the preset abnormal file name extension as the target file.

In a possible implementation, the apparatus further includes a detection module, configured to:
obtain a plurality of operation records of a plurality of operated files, and obtain an operated file corresponding to a second operation and a third operation based on the plurality of operation records, where the plurality of operation records correspond to the plurality of operated files, each of the plurality of operation records is for recording an operation on an operated file corresponding to the operation record, and the second operation and the third operation are operations corresponding to a same operated file; and
determine, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

In a possible implementation, the apparatus further includes a prompt module, configured to:
send the target file to a user to determine whether the target file undergoes an encryption operation performed by the user; and
send an alarm prompt if the user does not perform the encryption operation on the target file.

It is to be noted that, for specific function implementations of the apparatus for detecting ransomware, refer to the description of the method for detecting ransomware. Details are not described herein again. All units or modules in the apparatus for detecting ransomware may be separately or together combined into one or more other units or modules, or one or more units or modules thereof may be split into a plurality of functionally smaller units or modules. This can implement same operations without affecting implementation of technical effects of embodiments of the present invention. The foregoing units or modules are divided based on logical functions. During actual application, functions of one unit (or module) may be implemented by a plurality of units (or modules), or functions of a plurality of units (or modules) may be implemented by one unit (or module).

Based on the descriptions of the foregoing method embodiments and apparatus embodiments, an embodiment of the present invention further provides a device for detecting ransomware.

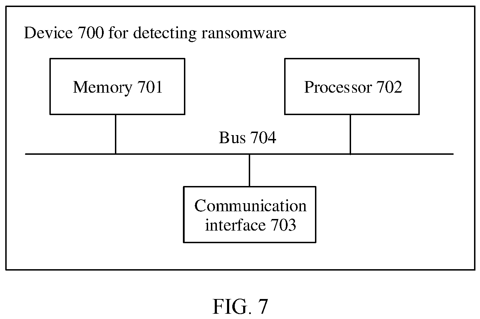

FIG. 7 is a schematic diagram of a structure of a device for detecting ransomware according to an embodiment of the present invention. As shown in FIG. 7, a device 700 for detecting ransomware (the device 700 may be specifically a computer device) includes a memory 701, a processor 702, a communication interface 703, and a bus 704. The memory 701, the processor 702, and the communication interface 703 implement mutual communication connections by the bus 704.

The memory 701 may be a read-only memory (Read Only Memory, ROM), a static storage device, a dynamic storage device, or a random access memory (Random Access Memory, RAM).

The memory 701 may store a program. When the program stored in the memory 701 is executed by the processor 702, the processor 702 and the communication interface 703 are configured to perform the steps of the method for detecting ransomware in embodiments of this application.

The processor 702 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the apparatus for detecting ransomware in embodiments of this application, or to perform the method for detecting ransomware in the method embodiments of this application.

Alternatively, the processor 702 may be an integrated circuit chip, and has a signal processing capability. In an implementation process, the steps of the method for detecting ransomware in this application may be completed by using an integrated logic circuit of hardware in the processor 702 or instructions in a form of software. The processor 702 may alternatively be a general purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. The software module may be located in a storage medium mature in the art, such as a random access memory, a flash memory, a read-only memory, a programmable read-only memory, an electrically erasable programmable memory, or a register. The storage medium is located in the memory 701. The processor 702 reads information in the memory 701, and completes, with reference to hardware of the processor 702, functions that need to be performed by the units included in the apparatus for detecting ransomware in embodiments of this application, or performs the method for detecting ransomware in the method embodiments of this application.

By way of example, but not as a limitation, a transceiver apparatus such as a transceiver is used for the communication interface 703, to implement communication between the device 700 and another device or communication network. For example, data may be obtained through the communication interface 703.

The bus 704 may be included in a channel for information transmission among various components (such as the memory 701, the processor 702, and the communication interface 703) of the device 700.

It should be noted that although only a memory, a processor, and a communication interface are shown in the device 700 shown in FIG. 7, in a specific implementation process, a person skilled in the art should understand that the device 700 further includes another component required for implementing normal operation. In addition, based on a specific requirement, a person skilled in the art should understand that the device 700 may further include a hardware component for implementing another additional function. In addition, a person skilled in the art should understand that the device 700 may include only a component necessary for implementing embodiments of this application, and does not need to include all the components shown in FIG. 7.

An embodiment of this application further provides a chip system. The chip system is applied to an electronic device. The chip system includes one or more interface circuits and one or more processors. The interface circuit and the processor are interconnected by a line. The interface circuit is configured to receive a signal from a memory of the electronic device and send the signal to the processor, where the signal includes computer instructions stored in the memory. When the processor executes the computer instructions, the electronic device performs the method for detecting ransomware.

An embodiment of this application further provides a computer-readable storage medium. The computer-readable storage medium stores instructions. When the instructions are run on a computer or a processor, the computer or the processor performs one or more steps in any one of the foregoing methods.

An embodiment of this application further provides a computer program product including instructions. When the computer program product is run on a computer or a processor, the computer or the processor performs one or more steps in any one of the foregoing methods.

It may be clearly understood by a person skilled in the art that, for the purpose of convenient and brief description, for a detailed working process of the foregoing system, apparatus, and unit, refer to the specific description of a corresponding step process in the foregoing method embodiments. Details are not described herein again.

It should be understood that unless otherwise specified, "/" in descriptions of this application indicates an "or" relationship between associated objects. For example, A/B may indicate A or B. A and B may be singular or plural. In addition, in the descriptions of this application, unless otherwise specified, "plurality of" means two or more than two. "At least one of the following items (pieces)" or a similar expression thereof means any combination of these items, including any combination of singular items (pieces) or plural items (pieces). For example, at least one of a, b, or c may indicate: a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that have basically the same functions and effects. A person skilled in the art may understand that the terms such as "first" and "second" do not limit a quantity or an execution sequence, and the terms such as "first" and "second" do not indicate a definite difference. In addition, in embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

In several embodiments provided in this application, it should be understood that the disclosed system, apparatus, and method may be implemented in another manner. For example, division into the units is merely logical function division and may be another division during actual implementation. For example, a plurality of units or components may be combined or integrated into another system, or some features may be omitted or not performed. The displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

All or some of the foregoing embodiments may be implemented by software, hardware, firmware, or any combination thereof. When implemented by software, all or some of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium, or transmitted through the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a read-only memory (read-only memory, ROM), a random access memory (random access memory, RAM), a magnetic medium, for example, a floppy disk, a hard disk drive, a magnetic tape, or a magnetic disk, an optical medium, for example, a digital versatile disc (digital versatile disc, DVD), or a semiconductor medium, for example, a solid-state drive (solid-state drive, SSD).

The foregoing descriptions are merely specific implementations of embodiments of this application, but are not intended to limit the protection scope of embodiments of this application. Any variation or replacement within the technical scope disclosed in embodiments of this application shall fall within the protection scope of embodiments of this application. Therefore, the protection scope of embodiments of this application shall be subject to the protection scope of the claims.

## Claims

1. A method for detecting ransomware, comprising:
obtaining a partial feature of a target file based on preset data in the target file, wherein the partial feature comprises a partial incremental entropy and/or partial histogram statistical data;
determining, based on the partial feature of the target file, whether the target file is an encrypted file; and
determining, if the target file is the encrypted file, that the target file is attacked by the ransomware.

2. The method according to claim 1, wherein the method further comprises:
obtaining a magic number and a file name extension of the target file;
determining, based on a preset correspondence between the magic number and the file name extension, whether the magic number corresponds to the file name extension in the target file; and
triggering, if the magic number corresponds to the file name extension in the target file, the operation of obtaining a partial feature of a target file based on preset data in the target file.

3. The method according to claim 1 or 2, wherein the method further comprises:
obtaining a plurality of operation records of a plurality of operated files, wherein the plurality of operation records correspond to the plurality of operated files, and each of the plurality of operation records is for recording an operation on an operated file corresponding to the operation record;
generating a plurality of operation mode sequences within first preset duration based on the plurality of operation records, wherein the plurality of operation mode sequences correspond to the plurality of operation records;
obtaining, one by one from the plurality of operation mode sequences, an operation mode sequence that matches a preset operation mode sequence; and
determining, when a quantity of operation mode sequences that match the preset operation mode sequence is greater than a first preset quantity, an operated file corresponding to the operation mode sequence that matches the preset operation mode sequence as the target file.

4. The method according to claim 1 or 2, wherein the method further comprises:
obtaining a plurality of operation records of a plurality of operated files, and obtaining, based on the plurality of operation records, a same operated file on which a write operation is performed by a same device, wherein the plurality of operation records correspond to the plurality of operated files, and each of the plurality of operation records is for recording an operation on an operated file corresponding to the operation record;
successively obtaining a write offset and a write length of the same operated file on which the write operation is performed by the same device;
accumulating, if a current write offset is greater than a previous write offset for the same operated file on which the write operation is performed by the same device, a current write length and a previous write length for the same operated file to obtain an accumulated write length value of the same operated file;
obtaining a write ratio of the same operated file based on a size of the same operated file and the accumulated write length value; and
determining, if the write ratio of the same operated file within second preset duration is not less than a preset write ratio, the same operated file on which the write operation is performed by the same device as the target file.

5. The method according to claim 1 or 2, wherein the method further comprises:
obtaining a plurality of operation records of a plurality of operated files, and obtaining operated files corresponding to a first operation based on the plurality of operation records, wherein the plurality of operation records correspond to the plurality of operated files, and each of the plurality of operation records is for recording an operation on an operated file corresponding to the operation record;
obtaining, one by one from the operated files corresponding to the first operation, an operated file that matches a preset abnormal file name extension; and
determining, when a quantity of operated files that match the preset abnormal file name extension is greater than a second preset quantity, the operated file that matches the preset abnormal file name extension as the target file.

6. The method according to claim 1 or 2, wherein the method further comprises:
obtaining a plurality of operation records of a plurality of operated files, and obtaining an operated file corresponding to a second operation and a third operation based on the plurality of operation records, wherein the plurality of operation records correspond to the plurality of operated files, each of the plurality of operation records is for recording an operation on an operated file corresponding to the operation record, and the second operation and the third operation are operations corresponding to a same operated file; and
determining, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

7. The method according to any one of claims 1 to 6, wherein the method further comprises:
sending the target file to a user to determine whether the target file undergoes an encryption operation performed by the user; and
sending an alarm prompt if the user does not perform the encryption operation on the target file.

8. An apparatus for detecting ransomware, comprising:
an obtaining module, configured to obtain a partial feature of a target file based on preset data in the target file, wherein the partial feature comprises a partial incremental entropy and/or partial histogram statistical data;
a judgment module, configured to determine, based on the partial feature of the target file, whether the target file is an encrypted file; and
a determining module, configured to determine, if the target file is the encrypted file, that the target file is attacked by the ransomware.

9. The apparatus according to claim 8, wherein the apparatus further comprises a comparison module, configured to:
obtain a magic number and a file name extension of the target file;
determine, based on a preset correspondence between the magic number and the file name extension, whether the magic number corresponds to the file name extension in the target file; and
trigger, if the magic number corresponds to the file name extension in the target file, the operation of obtaining a partial feature of a target file based on preset data in the target file.

10. The apparatus according to claim 8 or 9, wherein the apparatus further comprises a detection module, configured to:
obtain a plurality of operation records of a plurality of operated files, wherein the plurality of operation records correspond to the plurality of operated files, and each of the plurality of operation records is for recording an operation on an operated file corresponding to the operation record;
generate a plurality of operation mode sequences within first preset duration based on the plurality of operation records, wherein the plurality of operation mode sequences correspond to the plurality of operation records;
obtain, one by one from the plurality of operation mode sequences, an operation mode sequence that matches a preset operation mode sequence; and
determine, when a quantity of operation mode sequences that match the preset operation mode sequence is greater than a first preset quantity, an operated file corresponding to the operation mode sequence that matches the preset operation mode sequence as the target file.

11. The apparatus according to claim 8 or 9, wherein the apparatus further comprises a detection module, configured to:
obtain a plurality of operation records of a plurality of operated files, and obtain, based on the plurality of operation records, an operated file on which a write operation is performed by a same device, wherein the plurality of operation records correspond to the plurality of operated files, and each of the plurality of operation records is for recording an operation on an operated file corresponding to the operation record;
successively obtain a write offset and a write length of the operated file on which the write operation is performed by the same device;
accumulate, if a current write offset is greater than a previous write offset for the operated file on which the write operation is performed by the same device, a current write length and a previous write length for the operated file to obtain an accumulated write length value of the operated file;
obtain a write ratio of the operated file based on a size of the operated file and the accumulated write length value; and
determine, if the write ratio of the operated file within second preset duration is not less than a preset write ratio, the operated file on which the write operation is performed by the same device as the target file.

12. The apparatus according to claim 8 or 9, wherein the apparatus further comprises a detection module, configured to:
obtain a plurality of operation records of a plurality of operated files, and obtain operated files corresponding to a first operation based on the plurality of operation records, wherein the plurality of operation records correspond to the plurality of operated files, and each of the plurality of operation records is for recording an operation on an operated file corresponding to the operation record;
obtain, one by one from the operated files corresponding to the first operation, an operated file that matches a preset abnormal file name extension; and
determine, when a quantity of operated files that match the preset abnormal file name extension is greater than a second preset quantity, the operated file that matches the preset abnormal file name extension as the target file.

13. The apparatus according to claim 8 or 9, wherein the apparatus further comprises a detection module, configured to:
obtain a plurality of operation records of a plurality of operated files, and obtain an operated file corresponding to a second operation and a third operation based on the plurality of operation records, wherein the plurality of operation records correspond to the plurality of operated files, each of the plurality of operation records is for recording an operation on an operated file corresponding to the operation record, and the second operation and the third operation are operations corresponding to a same operated file; and
determine, if a quantity of types of name extensions of operated files corresponding to the second operation is not less than a third preset quantity, a quantity of types of name extensions of operated files corresponding to the third operation is not less than a fourth preset quantity, and the quantity of types of the name extensions of the operated files corresponding to the second operation is greater than the quantity of types of the name extensions of the operated files corresponding to the third operation, the operated file corresponding to the second operation and the third operation as the target file.

14. The apparatus according to any one of claims 8 to 13, wherein the apparatus further comprises a prompt module, configured to:
send the target file to a user to determine whether the target file undergoes an encryption operation performed by the user; and
send an alarm prompt if the user does not perform the encryption operation on the target file.

15. A device for detecting ransomware, comprising a processor and a memory, wherein
the processor is connected to the memory, the memory is configured to store program code, and the processor is configured to call the program code to perform the method for detecting ransomware according to any one of claims 1 to 7.

16. A computer-readable storage medium, wherein the computer-readable storage medium stores a computer program, the computer program comprises program instructions, and the program instructions are executed by a processor to perform the method for detecting ransomware according to any one of claims 1 to 7.

17. A computer program product, comprising a computer program, wherein the computer program is executed by a processor to implement the method for detecting ransomware according to any one of claims 1 to 7.

18. A chip system, wherein the chip system is applied to an electronic device; the chip system comprises one or more interface circuits and one or more processors; the interface circuit and the processor are interconnected by a line; the interface circuit is configured to receive a signal from a memory of the electronic device and send the signal to the processor, wherein the signal comprises computer instructions stored in the memory; and when the processor executes the computer instructions, the electronic device performs the method for detecting ransomware according to any one of claims 1 to 7.
